# EUROPEAN PATENT SPECIFICATION

(11) **EP 1 521 470 B1**
(45) Date of publication and mention of the grant of the patent: **20.03.2019**
(21) Application number: 04104480.1
(22) Date of filing: 16.09.2004
(51) Int. Cl.: H04N 7/173, H04N 21/434, H04N 21/234, H04N 21/458

(54) **Method and device for managing a list of services in a content transmission system**
Verfahren und Gerät zur Steuerung einer Liste in ein System zur Übertragung von Inhalt
Méthode et dispositif pour la gestion d'une liste de services dans un système de transmission de contenu

(30) Priority: 25.09.2003 FR 0311215
(43) Date of publication of application: 06.04.2005
(73) Proprietor: InterDigital Madison Patent Holdings, 75017 Paris (FR)
(72) Inventor: Nguyen, Jino, 35830 BETTON (FR)
(74) Representative: Huchet, Anne

(56) References cited:
- EP-A- 0 802 677
- EP-A- 0 823 798
- EP-A- 1 043 897
- WO-A-00/49800
- GB-A- 2 318 482

## Description

In a digital television transmission system, the digital streams comprise data describing the structure of the stream and the location of the various objects of which it is composed. According to the DVB ('Digital Video Broadcast') standard for example, these data are transmitted by way of descriptive tables contained in particular transport packets. A receiver device can, in a known manner, recover the packets corresponding to certain tables in the stream, knowing predetermined identifiers of packets containing the tables. These tables furthermore comprise additional table packet identifiers. The hierarchy of the stream can thus be reconstituted, and the objects which it contains processed appropriately by the receiver.

Typically, a table comprises a version number intended to allow a receiver an update of the table, by incrementation of this number during the updating of the table transmitted. For example, the DVB standard relating to service information comprises tables listing and describing the services available on a particular network. Given that a user should be able to access new services or else should not be confronted with a black screen if he selects a service listed by his receiver but which has, in fact, disappeared from the network, a receiver monitors the version numbers of the tables. In case of detection of a new version, a flag variable is set to the active state, and for example at the time of reinitialization of the receiver, the user is prompted to allow the receiver to proceed with the updating of the list of services. This takes a certain time, given that it is necessary to acquire and process the relevant tables, and if pertinent, to perform searches on several frequencies.

The document EP1043897 - THOMSON discloses that, in a digital network, a broadcaster sends services that are referenced by tables transmitted on one or several streams. Incoherence can occur between the contents of service table and the services really broadcasted. For example, it is possible that a table announces a service in a channel but this one is not here. For solving the incoherence, when a new version of an SDT table is detected and when it relates to one or more tracked services, its content is analysed in greater detail to determine whether changes have occurred at the level of at least one of the tracked services.

The document EP802677 - HUGHES ELECTRONICS discloses a system for monitoring multiplexed packet data streams consisting of digitally encoded video, audio, and data. A packet stream analyser comprising a tuner, a demodulator and an analyser logic analyzes the carrier signals within the 950 to 1450 MHz frequency range. The analyzer logic provides circuitry and software to monitor and verify the integrity of the received packet stream. An interface computer displays the monitoring and verification results."

The invention relates to a method of managing a list of services at the level of a receiver in a content transmission system comprising several distinct data streams, characterized by the step of :
- in case of detection of a new service on a given stream, checking whether the new service has already been stored in the list of services for another stream.

This check subsequently makes it possible to determine the necessity for a complete update of the receiver. Specifically, the new service is already available elsewhere.

The invention also relates to a receiver in a content transmission system comprising several distinct data streams, comprising means for determining a list of services transmitted in the system, characterized in that the said means are furthermore provided so as to detect the transmission of a new service and to check whether the new service has already been stored in the list of services for another stream.

The invention is defined by the claims.

The following figures will be useful for the understanding of the exemplary embodiment:
Figure 1 represents a block diagram of a digital television decoder according to the exemplary embodiment.
Figure 2a and 2b represents a flow chart of the method which is the subject of the exemplary embodiment.

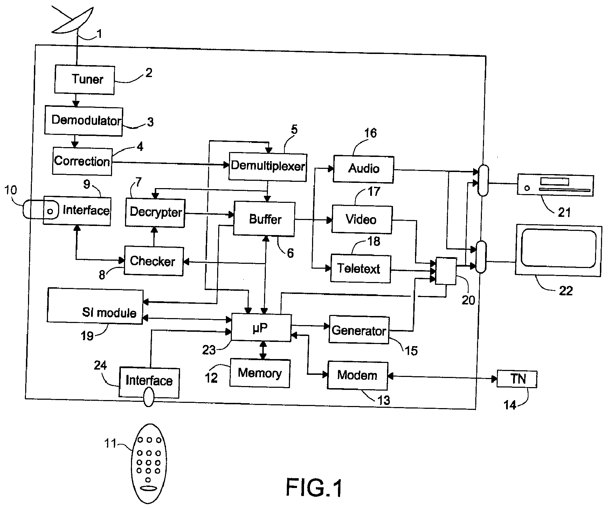

Figure 1 is a block diagram of a DVB (Digital Video Broadcasting) type digital television integrated decoder/receiver.

It is obvious that the invention is not limited to this particular environment and may easily be adapted to other transmission standards or to other service data transmission contexts.

The decoder of Figure 1 is linked to an antenna 1, itself linked to a tuner 2 of the encoder. The signal supplied by the tuner is demodulated by a demodulator 3. The demodulated data are corrected by a corrector circuit 4 and transmitted to a DVB transport stream demultiplexer 5.

The demultiplexer 5 comprises a number of filters programmed by a microprocessor 23 as a function of the various applications supported by the decoder.

The packets filtered by the demultiplexer are stored in predefined areas of a buffer memory 6 catering for these applications. If necessary, the information is first decrypted by a decrypter circuit 7 as a function of the user's entitlements, before being stored in this buffer memory 6.

According to the present example, the applications are five in number: an audio decoder 16, a video decoder 17, a teletext decoder 18, an access controller assembly (comprising the decrypter 7, a checking microcontroller 8 and an interface for microprocessor card 9 linked in normal operating mode to a microprocessor card 10), as well as a service data management module 19.

The decoder also comprises an infrared interface 24 of a remote control 11, the said interface also being linked to the microprocessor 23. The latter is connected to a memory 12 comprising the operating system as well as the resident or downloaded programmes for implementing the applications.

A modem 13 linked to the switched telephone network 14 is also controlled by the microprocessor.

A character generator 15 allows the generation of graphics or control menus relating to the parameters of the decoder or to a particular application. The video signal generated by this character generator is multiplexed with one of the video signals originating from the video decoder 17 or from the teletext decoder 18 heading for a first SCART socket linked to a television set 22 or a second SCART socket linked to a video recorder 21. The multiplexing circuit 20 is managed by the microprocessor 23.

The service data management module 19 is intended to manage the set of tables describing the stream, be they tables defined by MPEG II Systems (ISU/IEC 13818-1) describing the transport streams or TS or more commonly by the DVB-SI (ETSI TR 101 211).

Although in Figure 1 the module 19 is shown as an independent module to facilitate the explanation, it is typically implemented in the form of a program stored in the memory 12 and executed by the microprocessor 23.

The module 19 monitors and processes in particular two types of tables of the stream, namely the NIT ('Network Information Table') tables and the SDT ('Service Description Table') tables.

An NIT table describes a group of transport streams TS present on a network, as well as the information necessary for the acquisition of these streams, in particular the frequencies of the corresponding transponders.

In the initialization phase, the tuner locks onto a frequency relating to a default transport stream defined in advance and stored in the memory 12. The module 19 acquires the current NIT table. The 'PID' identifiers of the transport packets of this table possess the predetermined value 0x0010: the demultiplexer is programmed accordingly. Once the current NIT table has been acquired, the module stores the information relating to the transport streams described by this NIT table, as well as the version number of the current NIT table.

The module 19 locks the tuner successively onto each transport stream with a view to demultiplexing the corresponding SDT table for each stream. If the stream transmits one or more tables describing the services of streams other than the stream currently received, they are also demultiplexed and processed.

For each transport stream an SDT table comprises descriptors of the services present on the corresponding stream. The path to a service may be identified uniquely by three parameters:
'original_network_id' / 'transport_stream_id' / 'service_id'

These parameters respectively designate the initial source network of the service, the identifier of the transport stream which comprises the components of this service, as well as the unique identifier of the service. The latter identifier is unique with respect to the initial source network of the service. Stated otherwise, a service is defined uniquely in a given network by the first and the third parameters combined.

A transport stream is determined uniquely by the first two identifiers.

The identifier 'service_id' corresponds to the identifier 'program_number' used in the tables defined by the MPEG II Systems document. This identifier is used as index to access in a manner known per se in a table transmitted called the PAT ('Program Association Table') an additional identifier of PID packets corresponding to another table comprising the definition of the service in the form of audio and/or video and/or other components. This other table, one copy of which exists for each service, is called the PMT ('Program Map Table') and lists among other things the PID identifiers corresponding to the elementary components of which the service is composed.

The module uses the descriptors of services in the SDT tables to initialize a database relating to the services present in the network. The information stored comprises in particular for each service the three identifiers above. Stored therein is also other information present in the SDT tables, in particular the name of the service in plaintext, the name of the transmitter, etc.

Upon each new input, the module checks whether this service has not already been stored. When a service is identified repeatedly (same original_network_id and same service_id), the module 19 retains only the version of the service exhibiting the lowest bit error rate (BER).

For each SDT, the module also stores the table version number.

Also stored are the identifiers of the transport streams and the associated tuning data and the BER of the stream.

Once the complete list of available services has been compiled, installation of the receiver is terminated.

According to a variant embodiment, when a service is detected on several transport streams, all the paths (triplet of identifiers) heading for this service are stored, but only the path giving the lowest BER is used in practice. The advantage of storing several triplets is that in case of disappearance of a version of the service on a transport stream, it is possible to fall back immediately on this service present on another transport stream.

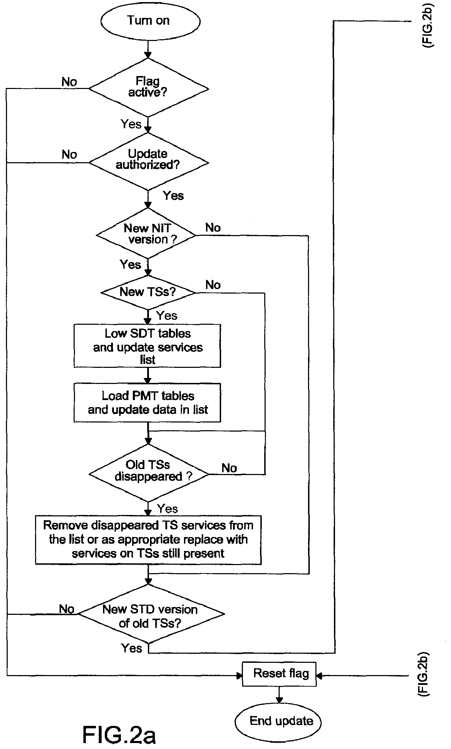

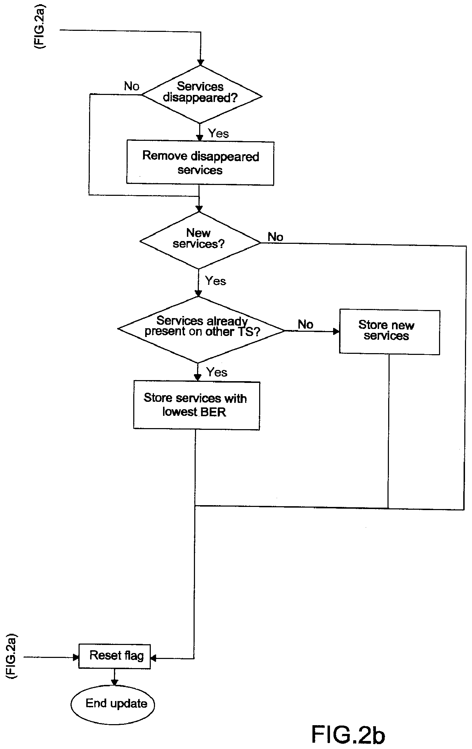

The updating of the list of services is performed as follows. Figure 2a and 2b illustrates the method according to the exemplary embodiment. When the receiver is turned on (or leaves the standby mode), the module checks the state of a specific flag. If the flag is in the active state, an update of the service list is necessary. If the flag is in the inactive state, no update is required at this juncture. The state of the flag depends on the occurring of certain events during the analysis of the transport streams. Within the framework of the present example, we shall be concerned essentially with the analysis of the SDT table.

The module 19 programs the demultiplexer to continuously monitor the SDT tables transmitted in the transport stream currently received (or the streams currently received if the receiver comprises the means to do this, such as an appropriate demultiplexer and a second tuner). The version numbers of these tables are extracted either from the demultiplexed tables or on the fly, and compared with the version numbers stored.

When a new version of the table is detected (or just a new table, for example an SDT table relating to another stream), a check verifies whether a new service has appeared. A new service in this context is a service for which the three identifiers cited above differ with respect to the services stored.

If such a service is detected, the module firstly checks whether an identical service has been stored previously, by comparing only the identifiers of the initial network and of the service proper. If such is the case, that is to say if two identical services are transmitted on two different transport streams, the list of services is immediately updated with the transport stream identifier of the service having the lowest BER. In such a case, the flag mentioned above is not activated.

Specifically, there is no modification of the list in a manner such as would require a warning to the user. He will simply benefit if pertinent from the reception of a better quality signal from this service.

If however a service has disappeared or a new service is not already listed for another transport stream, the flag is activated.

When the appliance is switched on, the state of the flag is tested. If it is active, the user is informed of the availability of an update. If the user confirms the update, the version numbers of the NIT tables and all the SDTs of the network are checked. To do this, the tuner is as before adjusted to receive the various transport streams in succession.

When a new version of an NIT table is detected, the module 19 checks the presence of new transport streams or the disappearance of streams previously stored. For each new stream detected, the corresponding SDT table is demultiplexed and processed as hereinabove, the new services being added to those already stored. If a transport stream disappears, the corresponding services are deleted from the stored list.

When a new version of an SDT table is detected, the procedure is as previously in respect of the addition of a service to the list of services or its removal from the list.

The state of the NIT is also monitored by way of the version number of this table: it contains the list of transport streams (the list of services for each stream is optional therein). The NIT therefore changes (change of version) when streams are added/removed or when the physical parameters of one or more transport streams change.

## Claims

1. Method of managing a list of services at the level of a receiver in a content transmission system comprising several distinct data streams, **characterized by**:
- when the receiver is turned on, checking whether a flag is set, and:
- if the flag is set inform the user of the availability of an update of the list of services, and:
- if the user authorizes the update, updating the list of services by adding services newly appeared and removing services having disappeared;
- monitoring the data streams, and:
- in case of detection of a service having disappeared, set the flag to request a further update of the list of services;
- in case of detection of a new service on a given stream, checking whether the new service has already been stored in the list of services for another stream and, if this service has already been stored, retaining the service having the best value of quality parameter without setting the flag, else if this service has not already been stored, setting the flag to request a further update of the list of services.

2. Method according to Claim 1, **characterized in that** the list is updated with the identifier of that of the services having the best quality, the other version of the service being erased.

3. Method according to one of any previous claims, **characterized in that** the quality parameter represents the data bit error rate of the streams.

4. Receiver in a content transmission system comprising several distinct data streams, comprising means (5, 6, 19, 23) for determining a list of services transmitted in the system, **characterized in that** the said means are configured to:
- when the receiver is turned on, check whether a flag is set, and:
- if the flag is set inform the user of the availability of an update of the list of services, and:
- if the user authorizes the update, update the list of services by adding services newly appeared and removing services having disappeared;
- monitor the data streams, and:
- in case of detection of a service having disappeared, set the flag to request a further update of the list of services;
- in case of detection of a new service on a given stream, checking whether the new service has already been stored in the list of services for another stream and, if this service has already been stored, retaining the service having the best value of quality parameter without setting the flag, else if this service has not already been stored, setting the flag to request a further update the list of services.

5. Receiver according to Claim 4, **characterized in that** it comprises means of entry of a user input to enable an update of the list following the detection of a new service.

## Patentansprüche

1. Verfahren zum Managen einer Liste von Diensten auf der Ebene eines Empfängers in einem Inhaltsübertragungssystem, das mehrere verschiedene Datenströme umfasst, wobei das Verfahren **gekennzeichnet ist durch**:
- wenn der Empfänger eingeschaltet wird, Prüfen, ob ein Merker gesetzt ist, und:
- falls der Merker gesetzt ist, den Nutzer über die Verfügbarkeit einer Aktualisierung der Liste von Diensten informieren, und:
- falls der Nutzer die Aktualisierung zulässt, Aktualisieren der Liste von Diensten **durch** Hinzufügen von Diensten, die neu erschienen sind, und **durch** Entfernen von Diensten, die verschwunden sind;
- Überwachen der Datenströme, und:
- im Fall der Detektion, dass ein Dienst verschwunden ist, Setzen des Merkers, um eine weitere Aktualisierung der Liste von Diensten anzufordern;
- im Fall der Detektion eines neuen Dienstes in einem gegebenen Datenstrom, Prüfen, ob der neue Dienst bereits in der Liste von Diensten für einen anderen Datenstrom gespeichert worden ist, und, falls dieser Dienst bereits gespeichert worden ist, Beibehalten des Dienstes mit dem besten Wert des Qualitätsparameters, ohne den Merker zu setzen, andernfalls, falls dieser Dienst nicht bereits gespeichert worden ist, Setzen des Merkers, um eine weitere Aktualisierung der Liste von Diensten anzufordern.

2. Verfahren nach Anspruch 1, **dadurch gekennzeichnet, dass** die Liste mit der Kennung desjenigen der Dienste mit der besten Qualität aktualisiert wird, während die andere Version des Dienstes gelöscht wird.

3. Verfahren nach einem der vorhergehenden Ansprüche, **dadurch gekennzeichnet, dass** der Qualitätsparameter die Datenbitfehlerrate der Datenströme repräsentiert.

4. Empfänger in einem Inhaltsübertragungssystem, das mehrere verschiedene Datenströme umfasst, wobei der Empfänger Mittel (5, 6, 19, 23) zum Bestimmen einer Liste von in dem System übertragenen Diensten umfasst, **dadurch gekennzeichnet, dass** die Mittel konfiguriert sind zum:
- wenn der Empfänger eingeschaltet wird, Prüfen, ob ein Merker gesetzt ist, und:
- falls der Merker gesetzt ist, den Nutzer über die Verfügbarkeit einer Aktualisierung der Liste von Diensten informieren, und:
- falls der Nutzer die Aktualisierung zulässt, Aktualisieren der Liste von Diensten durch Hinzufügen von Diensten, die neu erschienen sind, und durch Entfernen von Diensten, die verschwunden sind;
- Überwachen der Datenströme, und:
- im Fall der Detektion, dass ein Dienst verschwunden ist, Setzen des Merkers, um eine weitere Aktualisierung der Liste von Diensten anzufordern;
- im Fall der Detektion eines neuen Dienstes in einem gegebenen Datenstrom, Prüfen, ob der neue Dienst bereits in der Liste von Diensten für einen anderen Datenstrom gespeichert worden ist, und, falls dieser Dienst bereits gespeichert worden ist, Beibehalten des Dienstes mit dem besten Wert des Qualitätsparameters, ohne den Merker zu setzen, andernfalls, falls dieser Dienst nicht bereits gespeichert worden ist, Setzen des Merkers, um eine weitere Aktualisierung der Liste von Diensten anzufordern.

5. Empfänger nach Anspruch 4, **dadurch gekennzeichnet, dass** er Mittel zur Eingabe einer Nutzereingabe, um nach der Detektion eines neuen Dienstes eine Aktualisierung der Liste zu ermöglichen, umfasst.

## Revendications

1. Procédé de gestion d'une liste de services au niveau d'un récepteur dans un système de transmission de contenu comprenant plusieurs flux de données distincts, **caractérisé par** les étapes consistant à :
- lorsque le récepteur est activé, vérifier si un indicateur est défini, et :
- si l'indicateur est défini, informer l'utilisateur de la disponibilité d'une mise à jour de la liste de services, et :
- si l'utilisateur autorise la mise à jour, mettre à jour la liste de services en ajoutant les nouveaux services et en supprimant les services retirés ;
- surveiller les flux de données, et :
- en cas de détection d'un service retiré, définir l'indicateur pour demander une mise à jour complémentaire de la liste de services ;
- en cas de détection d'un nouveau service sur un flux donné, vérifier si le nouveau service est déjà stocké dans la liste de services pour un autre flux et, si ce service est déjà stocké, conserver le service présentant la meilleure valeur de paramètre de qualité sans définir l'indicateur, sinon, si ce service n'est pas déjà stocké, définir l'indicateur pour demander une mise à jour complémentaire de la liste de services.

2. Procédé selon la revendication 1, **caractérisé en ce que** la liste est mise à jour avec l'identifiant des services présentant la meilleure qualité, l'autre version du service étant supprimée.

3. Procédé selon l'une quelconque des revendications précédentes, **caractérisé en ce que** le paramètre de qualité représente le taux d'erreur sur les bits de données des flux.

4. Récepteur dans un système de transmission de contenu comprenant plusieurs flux de données distincts, comprenant des moyens (5, 6, 19, 23) pour déterminer une liste de services transmis dans le système, **caractérisé en ce que** lesdits moyens sont configurés pour :
- lorsque le récepteur est activé, vérifier si un indicateur est défini, et :
- si l'indicateur est défini, informer l'utilisateur de la disponibilité d'une mise à jour de la liste de services, et :
- si l'utilisateur autorise la mise à jour, mettre à jour la liste de services en ajoutant les nouveaux services et en supprimant les services retirés ;
- surveiller les flux de données, et :
- en cas de détection d'un service retiré, définir l'indicateur pour demander une mise à jour complémentaire de la liste de services ;
- en cas de détection d'un nouveau service sur un flux donné, vérifier si le nouveau service est déjà stocké dans la liste de services pour un autre flux et, si ce service est déjà stocké, conserver le service présentant la meilleure valeur de paramètre de qualité sans définir l'indicateur, sinon, si ce service n'est pas déjà stocké, définir l'indicateur pour demander une mise à jour complémentaire de la liste de services.

5. Récepteur selon la revendication 4, **caractérisé en ce qu'**il comprend un moyen de transmission d'une entrée utilisateur pour permettre une mise à jour de la liste suite à la détection d'un nouveau service.
